# EUROPEAN PATENT SPECIFICATION

(11) **EP 1 639 780 B1**
(45) Date of publication and mention of the grant of the patent: **27.02.2013**
(21) Application number: 04737139.8
(22) Date of filing: 23.06.2004
(51) Int. Cl.: H04L 29/06

(54) **SECURITY FOR PROTOCOL TRAVERSAL**
SICHERHEIT FÜR PROTOKOLL-TRAVERSAL
TRAVERSEE DE PROTOCOLE SECURISEE

(30) Priority: 27.06.2003 US 482763 P; 26.11.2003 US 721504
(43) Date of publication of application: 29.03.2006
(73) Proprietor: Core Wireless Licensing S.a.r.l., 2310 Luxembourg (LU)
(72) Inventor: LE, Franck, Pittsburgh, PA 15232 (US); FACCIN, Stefano, M., Dallas, Texas 75229-2622 (US)
(74) Representative: TBK
(86) International application number: PCT/IB2004/002086
(87) International publication number: WO 2005/002172

(56) References cited:
- WO-A-98/02815
- US-A1- 2003 061 496

## Description

### Field of the invention

This invention relates to a method and a system for protecting packets to be sent from a first network node to a second network node.

### Background of the invention

This invention is related to security and more particularly security protocols to protect user packets. There are currently two main security protocols which are Ipsec (as described, for example, in S. Kent, R. Atkinson, "Security Architecture for the Internet Protocol", RFC 2401, November 1998) and SKIP (Simple Key Management for Internet Protocols, information is available, for example, from www.skip.org, an overview can be found in http://www.tik.ee.ethz.ch/~skip/SKIP.html):
Ipsec (Internet Protocol Security) requires the two communication nodes to have a pre-established Security association. A security association (SA) is a set of policy and key(s) used to protect information. The particular security association is identified and retrieved by a Security Parameter Index (SPI) included in each packet. The establishment of the Security Association could be performed through several mechanisms such as IKE (Internet Key Exchange, described, for example, in D. Harkins, D. Carrel, "The Internet Key Exchange (IKE)" RFC 2409, November 1998) but this usually requires several messages between the two end points.

SKIP is a connectionless protocol (no connection set up is required) but all the information is carried in the SKIP header: this includes the encryption algorithm used, as well as the keying material that the receiving end will use to derive the session key. SKIP, however, relies on so-called Diffie-Hellman public values. For this, it is necessary that both nodes to know each other, since it is required that both nodes exchange their Diffie-Hellman public values. That is, it is required that both nodes know the other node's authenticated public value (i.e. Diffie-Hellman value) in order to compute a pairwise symmetric key.

Apart from the problem that the sending node and the receiving node have to know the other one's Diffie-Hellman public value, there is also a problem in case where intermediate nodes need to perform a verification of the validity of a sent packet (e.g., in firewalls and the like). In this case, it is also necessary that the intermediate node knows the Diffie-Hellman public value of the sending node and the receiving node, and, if necessary, that also the sending node and the receiving node know the Diffie-Hellman public value of the intermediate node. This limits the freedom of transport in the Internet, since in this case the route to be taken by the packet has to be known.

Thus, the solutions known in the prior art require that the nodes which are involved in a transmission of a packet and need to verify the validity thereof know each other before starting the actual transmission of the packet. Therefore, additional messages are required which lead to an increased amount of traffic. Moreover, managing of the network is complicated since, before performing the actual transmission, it is necessary to make sure that all nodes (i.e., also intermediate nodes) involved do have the required information for verifying the validity of the packet. This limits the freedom of the routes to be taken by a packet.

Document WO 98/02815 (document D1) discloses a method for transmitting security in a computer network, as set out in the preamble of claim 1. In particular, according to this document, a validity check is performed. In more detail, a time reference is used for a validity check. Namely, the time reference is stored in a packet header is read (upon receiving a packet) and compared again with the present time reference. If this comparison yields that the packet is old, the packet is presumed to be invalid and is immediately discarded.

### Summary of the invention

Thus, the object underlying the present invention resides in removing the above drawback of the prior art and to enable a protection of packets to be sent from a first network node to a second network node, wherein the amount of protocol messages is reduced and a flexible routing of the packet is possible.

This object is solved by a method **as set out in claim 1, and alternatively by network nodes as set out in claims 15, 16 or 17.**

Thus, according to the invention, every network node involved in transmitting a packet (i.e., the receiving node or any intermediate node) can rely only on the validity information included in the header (i.e., the new security header according to the invention) in order to perform a validity verification of a packet.

Hence, the nodes do not need to have any pre-established information (e.g. Security Association), or have to exchange key values beforehand. That is, there is no security nor state required, and no connection set up overhead is produced.

That is, any node on the path that needs to verify the validity of the messages can do so.

Each packet can be processed independently from the others.

In addition, for security reasons, it is preferable that the communicating nodes do not know the address or any other characteristics of a firewall or other middle node that may need to process the exchanged data/or perform some operations based on them. Therefore, since according to the present invention the authentication of the packets can be processed independently, the security in a network can be enhanced.

**Further advantageous developments are set out in the dependent claims.**

**For example, the** validity information may comprise security information indicating security services applied to the packet.

Moreover, the algorithm information may comprise values to initialise the algorithm to be used for performing a validity check of the packet.

The validity information may comprise public key information of the sending node.

The public key information may comprise reference information on how the public key can be obtained. Hence, it is not necessary that the actual public key is included in the header, such that the size of the header can be maintained sufficiently small. The reference information may comprise the identity of an entity form which the public key can be obtained, or may comprise a public key identifier for the public key.

However, if possible, the public key information may alternatively comprise the public key itself.

The public key information may comprise public key verification information indicating information in order to verify that the public key actually belongs to the sending node.

The validity information may comprise an information item for preventing replay attacks. That is, a mechanism to prevent replay attacks may be used, and the necessary information or data may be included in the header.

The information item for preventing replay attacks may contain an indication of the method to be used for anti replay attacks.

The information item for preventing replay attacks may contain a time stamp. However, also other mechanisms are possible, such as use of nonces and the like.

Furthermore, the packet may be signed using a private key corresponding to the Public Key indicated by the validity information in the packet header in the sending network node.

Moreover, in the receiving node, a validity check of a packet may be performed by referring to the validity information contained in the header of the packet.

In addition, a validity check of a packet may be performed by referring to the validity information contained in the header of the packet in an intermediate node. Thus, also an intermediate node may check the validity of the packet.

The packet may be sent by, e.g., Internet Protocol.

The network node may be a mobile network node.

### BRIEF DESCRIPTION OF THE DRAWINGS

Fig. 1 shows the basic configuration of a network comprising a sending node, a middle, i.e., an intermediate node and a receiving node according to a first embodiment of the invention,
Fig. 2 shows a flowchart illustrating a creation and sending of a packet including a security header according to the first embodiment of the invention,
Fig. 3 shows header fields of the security header according to the first embodiment of the invention,
Fig. 4 shows a flowchart illustrating a validity check performed by the receiving node and by the middle node according to the first embodiment of the invention, and
Fig. 5 shows a further example for a header format according to the first embodiment.

### DESCRIPTION OF THE PREFERRED EMBODIMENTS

In the following, preferred embodiments are described by referring to the enclosed drawings.

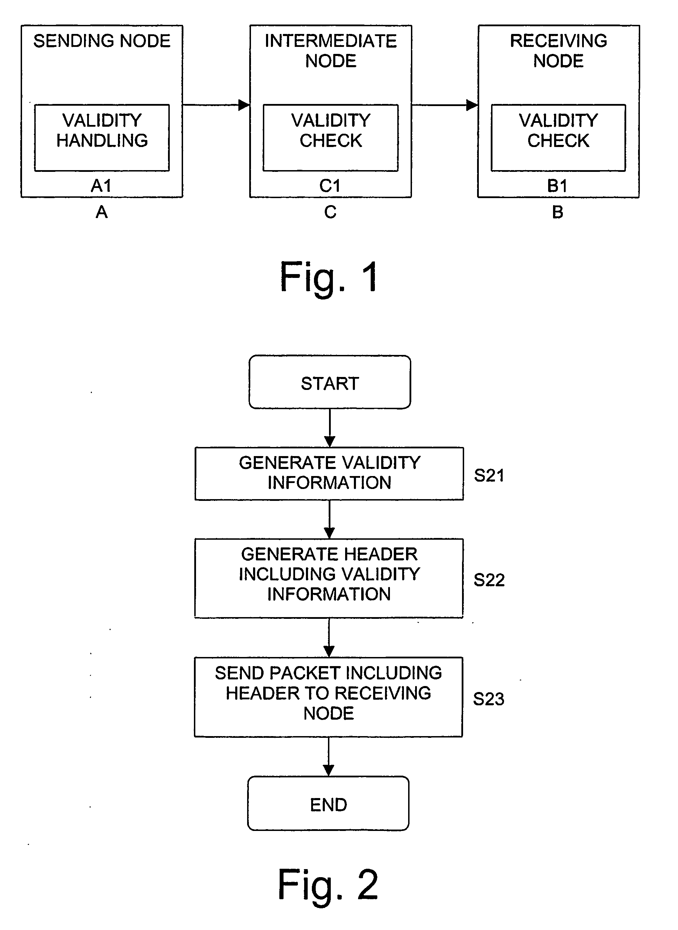

Fig. 1 shows a principle block diagram of network nodes concerned in the embodiments of the invention. Reference sign A denotes a first node, which is a sending node in this case. The node A may be a server, some kind of host, a user entity such as a Personal Computer connected to the Internet, a mobile node such as a mobile telephone or the like. The node A comprises a validity handling function A1 which serves to generate validity information and to insert this information into a header of a packet, as will be described later in more detail.

Reference sign B denotes a receiving node. This node can be, similar to the node A, a server, some kind of host, a user entity such as a Personal Computer connected to the Internet, a mobile node such as a mobile telephone or the like. The node B comprises a validity check function B1 which serves to check the validity of a received packet based on the validity information included in the header of the received packet, as will described later in more detail.

Reference sign C denotes a middle node or intermediate node. The node C can have the same structure as the node B, i.e., can be a server or the like, or can be a router. The intermediate nodes are also called middle-box entities (described, for example, in http://www.ietf.org/html.charters/midcom-charter.html) in IETF. Similar to the receiving node B, also such an intermediate node might need to verify the validity of the message and to make sure that the message was sent from A and was not modified on the way (data origin authentication, integrity protection). Thus, also the intermediate node C comprises a validity check function C1, similar as the corresponding validity check function B1 of the node B.

It is noted that A may not be aware of the intermediate nodes. The intermediate nodes should therefore not need to have a pre-established security association with A (e.g. IPsec SA).

Hence, according to the invention, the separate nodes do need the validity information received by means of the security header in order to verify the validity of a received packet. Thus, the nodes B and C do need only the validity check function, but do not need to have further functions related to establishing a security association or the like.

It is noted that the validity information can also include a pointer instead of the sender's public key. Namely, the public key may be too long to be carried into the header. Thus, instead of the public key, the validity information may contain a pointer to the public key of A (e.g., the address in a database of a corresponding server or the like).

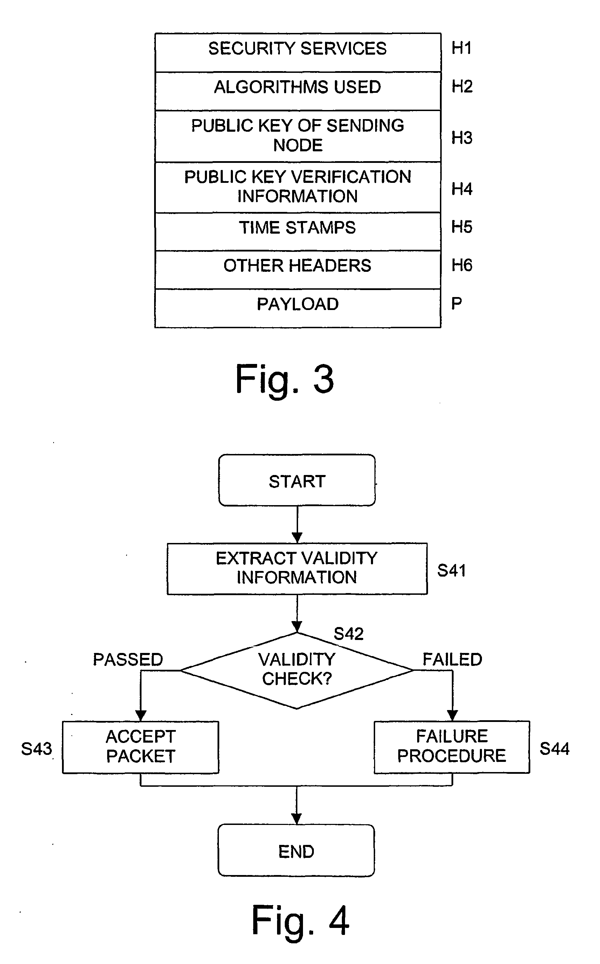

Fig. 2 shows a flowchart illustrating the basic procedure how the security header according to the first embodiment of the invention is generated in the node A. The procedure starts when a packet is to be generated or is to be sent. In step S21, the validity information is generated. The content of the validity information is described later with respect to Fig. 3. In step S22, the validity information generated in step S21 is inserted into the header, and in step S23, the packet including the header is sent to its destination, namely the node B. During transmission, it may pass the node C.

By referring to Fig. 3, the structure of the header according to the first embodiment is described. It is noted that the structure shown in the drawing does not necessarily represent the actual order of the headers, but gives an overview about the header fields according to the embodiment.

The new security header includes the following information, which are referred to as the validity information.

Security services (field H1): this field informs the receiving nodes about the security services that have been applied to the packet (e.g. encryption, integrity protection, etc.).

### Algorithms used (field H2)

### Public Key of the sending node (field H3)

Alternatively, field H3 may contain a pointer to the sender's public key since the public key itself may be too long to be carried in the packet, as described above.

Public Key verification information (field H4). This information indicates how the receiving nodes can make sure that the Public Key belongs to the claimed entity (i.e., the sending node). This could e.g. include a Certificate, or just the indication that CGA has been applied (CGA: Cryptographically Generated Address, as described, for example, in Cryptographically Generated Addresses by Tuomas Aura, February 2003, (http://www.ietf.org/internet-drafts/draft-aura-cga-00.txt*)*.

As for the public key described above, the certificate may be too long. Therefore, also this field could carry a pointer comprising information as to where to retrieve the relevant certificate to verify the validity of this packet. The pointer may include the address of a corresponding server, for example, and a more detailed address for accessing a database within this server, for example.

### - Time stamps for replay protection (field H5)

In Fig. 3, other headers necessary for the packet (e.g., addresses and the like) are denoted by the field H6. The actual payload of the packet is denoted by the reference sign P.

Thus, by using the above information, the receiving node B and intermediate node(s) C can check the validity of the packet based only on the received validity information.

The principle of the validity check is illustrated in the flowchart of Fig. 4. In step S41, the validity information is extracted from the header of a received packet. In step S42, the validity check is performed, and depending on the result (i.e., whether the packet fails or passes validity check), the packet is accepted (step S43), or a failure procedure is started (step S44). The failure procedure may be discarding of the packet and/or informing the user of the receiving and/or sending node that the packet has be corrupted. In case of an intermediate node, the packet is forwarded after it has been accepted in step S43.

The validity check is performed based on the information contained in the different field of the security header according to the embodiment of the description. The security services information in field H1 indicates to the validity check function B1/C1 of the receiving/middle node which security service is present. That is, based on this information the validity check function can decide how the validity check has to be performed. The field H2 comprising the algorithm information indicates which algorithm the validity check function has to use in order to perform the validity check. The field H3 indicates the public key of the sending node which is required to compute a key in order to check the validity. If necessary, the information in field H4 can be used to verify that the received public key is indeed the public key of the sending node. The information in field H5 (time stamp) can be used to check whether the packet is still "valid", or whether it is out-of-date, in order to avoid a replay attack.

Thus, the receiving node or an intermediate node can perform a validity verification without relying on a security association or preset public key values or the like. That is, the receiving node and intermediate nodes can perform the validity check independently from further security information.

The new security header according to the invention can be used, for example:
- To protect transparent traversal protocols like TIST (described, for example, in Melinda Shore, The TIST (Topology-Insensitive Service Traversal) Protocol, Internet draft, May 2002),
- To provide security in environments where Proxies are deployed: A proxy may create/modify the user state based on the received messages and it therefore needs to make sure that the messages are coming from the valid user and have not been modified, and/or
- To securely update the state of stateful inspection packet filters (Firewalls) when Mobile IP is used.

Thus on receipt of the messages, thanks to the information carried in the header, the intermediate nodes will be able to verify the validity of the packets. Typically, the sender will sign the messages using the Private Key corresponding to the Public Key sent in the message header.

As when IPsec was first deployed, for legacy network entities, this invention can be implemented using a "Bump In the Stack" implementation (also described in S. Kent, R. Atkinson, "Security Architecture for the Internet Protocol", RFC 2401, November 1998). That is, in "Bump-in-the-stack" (BITS) implementations, IPsec is implemented "underneath" an existing implementation of an IP protocol stack, between the native IP and the local network drivers. Source code access for the IP stack is not required in this context, making this implementation approach appropriate for use with legacy systems. This approach, when it is adopted, is usually employed in hosts.

Otherwise, for other implementations, the present invention can be implemented as described above with respect to Figs. 1 to 4.

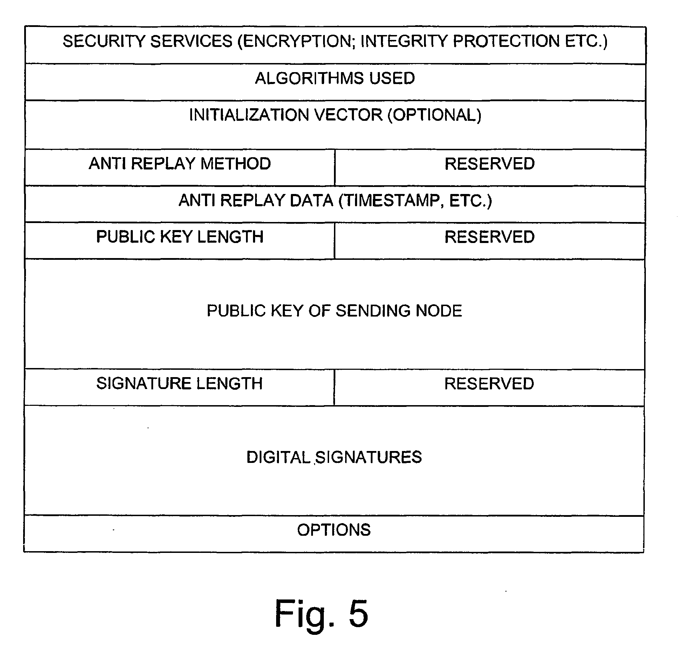

As mentioned above, the order of the header fields is not limited to the example shown in Fig. 3. Fig. 5 illustrates a further possible format.

In addition, in the above description of the first embodiment, time stamp was given as an example for a mechanism to prevent replay attack. However, also other suitable mechanisms to prevent replay attacks can be used. That is, in the header some other suitable information item for preventing replay attacks may be introduced.

Another example for a mechanism for preventing replay attacks is the use of nonces. Further applicable anti replay attack mechanisms are described in document: "On Preventing Replay Attacks on Security Protocols" by Sreekanth Malladi, Jim Alves-Foss, Robert B. Heckendorn, Center for Secure and Dependable Systems, Department of Computer Science, University of Idaho, Moscow, ID 83844 USA (http://www.cs.uidaho.edu/-jimaf/docs/replay02.pdf).

In the following, a second embodiment of the invention is described.

According to the second embodiment, not every single packet will contain the security header. In particular, according to the second embodiment, the security header is added only to some specific packets. Possible applications are Mobile IPv6 and NSIS (Next Steps In signaling, described in http://www.ietf.org/html.charters/nsis-charter.html, for example) . In Mobile IPv6 case, in order to allow firewalls to be able to process Mobile IPv6 packets correctly and therefore detect, read and authenticate Binding Update messages without requiring the FW and the MN to have a pre-shared security relation, only packets containing Binding Update messages need to have such security header. In case of NSIS signaling used e.g. in the TIST meaning (i.e. to allow a MN to communicate with a firewall without sharing any security association), again only specific packets carrying the signaling will contain the security header. So, the processing of asymmetric encryption is limited to a few elements in the networks and only to a few packets, and not to all packets of the communication.

Hence, the amount of information to be included in the communication packets as a whole is reduced, since only a part of the packets contain the security header according to the invention. Moreover, the operation load is reduced since not every single packet has to be checked with respect to the validity thereof.

The invention is not limited to the embodiments described above but can vary within the scope of the claims.

For example, the above embodiments can be freely combined. For example, there may be cases where for one kind of communication (e.g., requiring a high degree of security) every single packet contains the security header, whereas for other kinds of communication only a part of the packets contain the security header.

Moreover, it is not necessary to include the actual public key into the header. Namely, public keys may be stored in some database. Therefore, a protocol may be adapted by which the public key can be retrieved from such a database. Such a protocl is defined for SKIP, for example, such that this existing protocol can easily be adapted. It is noted that there is only one retrieval necessary for a series of packets, since all packets within one communication will carry the same public key. This also reduces the amount of information to be carried with in a header.

Hence, the validity information in the header may comprise the entity (e.g., the database) from which the public key can be obtained. Alternatively, the validity information may comprise a public key identifier for the public key.

Furthermore, it is not required that every node receiving or processing the packet needs to verify the header. Therefore, also in cases in which each packet has the new security header according to the invention, the necessary operation load is limited.

In addition, in the first embodiment only one intermediate network node C has been described. However, there may be a plurality of intermediate network nodes adapted to perform a validity verification.

## Claims

1. A method for protecting packets to be sent from a first network node (**A**) to a second network node (**B**), comprising
generating (**S21**) validity information for a packet; generating (**S22**) a header for the packet, comprising the validity information,
sending (**S22**) the packet including the header from the first network node to the second network node,
**characterized in that**
the validity information comprises all necessary information required for performing a validity check of the packet, and the validity information comprises algorithm information (**H2**) to be used for performing a validity check of the packet,
wherein the algorithm information (**H2**) indicates an algorithm to be used for performing a validity check of the packet and comprises values to initialise the algorithm to be used for performing a validity check of the packet.

2. The method according to claim 1, wherein the validity information comprises security information (**H1**) indicating security services applied to the packet.

3. The method according to claim 1, wherein the validity information comprises public key information of the sending node (**H3**).

4. The method according to claim 3, wherein the public key information (**H3**) comprises reference information on how the public key can be obtained.

5. The method according to claim 4, wherein the reference information comprises an identity of an entity from which the public key can be obtained.

6. The method according to claim 4, wherein the reference information comprises a public key identifier for the public key.

7. The method according to claim 3, wherein the public key information (**H3**) comprises the public key itself.

8. The method according to claim 3, wherein the public key information comprises public key verification information (**H4**) indicating information in order to verify that the public key actually belongs to the sending node.

9. The method according to claim 1, wherein the validity information comprises an information item for preventing replay attacks (**H5**).

10. The method according to claim 9, wherein the information item for preventing replay attacks (**H5**) contains the indication of the method to be used for anti replay attacks.

11. The method according to claim 9, wherein the information item for preventing replay attacks (**H5**) contains a time stamp.

12. The method according to claim 3, further comprising
signing the packet using a private key corresponding to the Public Key indicated by the validity information in the packet header (**H3**) in the sending network node.

13. The method according to claim 1, further comprising
performing a validity check (**S42**) of a packet by referring to the validity information contained in the header of the packet in the receiving node.

14. The method according to claim 1, further comprising
performing a validity check (**S42**) of a packet by referring to the validity information contained in the header of the packet in an intermediate node.

15. A network node (**A**) for sending packets to a receiving network node, comprising
means (**A1**) for generating validity information for a packet;
means (**A1**) for generating a header for the packet, comprising the validity information, and
means for sending the packet including the header to the receiving network node,
wherein the validity information comprises all necessary information required for performing a validity check of the packet, and the validity information comprises algorithm information (**H2**) to be used for performing a validity check of the packet,
wherein the algorithm information (**H2**) indicates an algorithm to be used for performing a validity check of the packet and comprises values to initialise the algorithm to be used for performing a validity check of the packet.

16. A network node (**B**) for receiving packets from a sending network node, comprising
means (**B1**) for performing a validity check of a packet by referring to validity information contained in the header of the packet,
wherein the validity information comprises all necessary information required for performing a validity check of the packet, and the validity information comprises algorithm information (**H2**) to be used for performing a validity check of the packet,
wherein the algorithm information (**H2**) indicates an algorithm to be used for performing a validity check of the packet and comprises values to initialise the algorithm to be used for performing a validity check of the packet.

17. A network node (**C**) for forwarding packets from a sending network node to a receiving network node, comprising
means (**C1**) for performing a validity check of a packet by referring to validity information contained in the header of the packet ,
wherein the validity information comprises all necessary information required for performing a validity check of the packet, and the validity information comprises algorithm information (**H2**) to be used for performing a validity check of the packet,
wherein the algorithm information (**H2**) indicates an algorithm to be used for performing a validity check of the packet and comprises values to initialise the algorithm to be used for performing a validity check of the packet.

18. The network node according to one of the claims 15 to 17, wherein the validity information comprises security information (**H1**) indicating security services applied to the packet.

19. The network node according to one of the claims 15 to 17, wherein the validity information comprises public key information (**H3**) of the sending node.

20. The network node according to claim 19, wherein the public key information (**H3**) comprises reference information on how the public key can be obtained.

21. The network node according to claim 20, wherein the reference information comprises an identity of an entity from which the public key can be obtained.

22. The network node according to claim 20, wherein the reference information comprises a public key identifier for the public key.

23. The network node according to claim 19, wherein the public key information (**H3**) comprises the public key itself.

24. The network node according to claim 19, wherein the public key information comprises public key verification information (**H4**) indicating information in order to verify that the public key actually belongs to the sending node.

25. The network node according to one of the claims 15 to 17, wherein the validity information comprises an information item for preventing replay attacks (**H5**).

26. The network node according to claim 25, wherein the information item for preventing replay attacks (**H5**) contains the indication of the method to be used for anti replay attacks.

27. The network node according to claim 25, wherein the information item for preventing replay attacks contains a time stamp.

28. The network node according to claim 19, further comprising
means for signing the packet using a private key corresponding to the public key indicated by the validity information in the packet header in the sending network node.

29. The network node according to one of the claims 15 to 17, wherein the network node is a mobile network node.

30. A network system comprising a network node (**A**) according to claim 15 adapted to send a packet, and a network node (**B**) according to claim 16 adapted to receive the packet.

31. The network system according to claim 30, further comprising at least one intermediate node (C) according to claim 17.

## Patentansprüche

1. Verfahren zum Schützen von Paketen, die von einem ersten Netzwerkknoten (**A**) zu einem zweiten Netzwerkknoten (**B**) zu senden sind, mit
Erzeugen (**S21**) von Gültigkeitsinformationen für ein Paket;
Erzeugen (**S22**) eines Header für das Paket mit den Gültigkeitsinformationen,
Senden (**S22**) des Pakets mit dem Header von dem ersten Netzwerkknoten zu dem zweiten Netzwerkknoten,
**dadurch gekennzeichnet, dass**
die Gültigkeitsinformationen alle nötigen Informationen aufweisen, die zur Durchführung einer Gültigkeitsprüfung des Pakets erforderlich sind, und die Gültigkeitsinformationen Algorithmusinformationen (**H2**) aufweisen, die zur Durchführung einer Gültigkeitsprüfung des Pakets zu verwenden sind,
wobei die Algorithmusinformationen (**H2**) einen zur Durchführung einer Gültigkeitsprüfung des Pakets zu verwendenden Algorithmus angeben und Werte zum Initialisieren des zur Durchführung einer Gültigkeitsprüfung des Pakets zu verwendenden Algorithmus aufweisen.

2. Verfahren nach Anspruch 1, wobei die Gültigkeitsinformationen Sicherheitsinformationen (**H1**) aufweisen, die an dem Paket angewendete Sicherheitsdienste angeben.

3. Verfahren nach Anspruch 1, wobei die Gültigkeitsinformationen Informationen bezüglich eines öffentlichen Schlüssels des sendenden Knotens (**H3**) aufweisen.

4. Verfahren nach Anspruch 3, wobei die Informationen bezüglich des öffentlichen Schlüssels (**H3**) Referenzinformationen aufweisen, wie der öffentliche Schlüssel erhalten werden kann.

5. Verfahren nach Anspruch 4, wobei die Referenzinformationen eine Identität einer Einheit aufweisen, von der der öffentliche Schlüssel erhalten werden kann.

6. Verfahren nach Anspruch 4, wobei die Referenzinformationen einen öffentlichen Schlüsselidentifizierer für den öffentlichen Schlüssel aufweisen.

7. Verfahren nach Anspruch 3, wobei die Informationen bezüglich des öffentlichen Schlüssels (**H3**) den öffentlichen Schlüssel selbst aufweisen.

8. Verfahren nach Anspruch 3, wobei die Informationen bezüglich des öffentlichen Schlüssels öffentliche Schlüsselverifizierungsinformationen (**H4**) aufweisen, die Informationen angeben, um zu verifizieren, dass der öffentliche Schlüssel tatsächlich zu dem sendenden Knoten gehört.

9. Verfahren nach Anspruch 1, wobei die Gültigkeitsinformationen eine Information zum Verhindern von Replay-Angriffen (**H5**) aufweisen.

10. Verfahren nach Anspruch 9, wobei die Information zum Verhindern von Replay-Angriffen (**H5**) die Angabe des Verfahrens enthält, das für Anti-Replay-Angriffe zu verwenden ist.

11. Verfahren nach Anspruch 9, wobei die Information zum Verhindern von Replay-Angriffen (**H5**) einen Zeitstempel enthält.

12. Verfahren nach Anspruch 3, weiterhin mit
Signieren des Pakets unter Verwendung eines privaten Schlüssels entsprechend dem öffentlichen Schlüssel, der durch die Gültigkeitsinformationen in dem Paket-Header (**H3**) angegeben ist, in dem sendenden Netzwerkknoten.

13. Verfahren nach Anspruch 1, weiterhin mit
Durchführen einer Gültigkeitsprüfung (**S42**) eines Pakets durch Bezugnahme auf die Gültigkeitsinformationen, die in dem Header des Pakets enthalten sind, in dem empfangenen Knoten.

14. Verfahren nach Anspruch 1, weiterhin mit
Durchführen einer Gültigkeitsprüfung (**S42**) eines Pakets durch Bezugnahme auf die Gültigkeitsinformationen, die in dem Header des Pakets enthalten sind, in einem Zwischenknoten.

15. Netzwerkknoten (**A**) zum Senden von Paketen zu einem empfangenen Netzwerkknoten, mit
einer Einrichtung (**A1**) zum Erzeugen von Gültigkeitsinformationen für ein Paket;
einer Einrichtung (**A1**) zum Erzeugen eines Headers für das Paket mit den Gültigkeitsinformationen,
einer Einrichtung zum Senden des Pakets einschließlich des Headers zu dem empfangenen Netzwerkknoten,
wobei die Gültigkeitsinformationen alle nötigen Informationen aufweisen, die zur Durchführung einer Gültigkeitsprüfung des Pakets erforderlich sind, und die Gültigkeitsinformationen Algorithmusinformationen (**H2**) aufweisen, die zur Durchführung einer Gültigkeitsprüfung des Pakets zu verwenden sind,
wobei die Algorithmusinformationen (**H2**) einen zur Durchführung einer Gültigkeitsprüfung des Pakets zu verwendenden Algorithmus angeben und Werte zum Initialisieren des zur Durchführung einer Gültigkeitsprüfung des Pakets zu verwendenden Algorithmus aufweisen.

16. Netzwerkknoten (**B**) zum Empfangen von Paketen von einem sendenden Netzwerkknoten, mit
einer Einrichtung (**B1**) zur Durchführung einer Gültigkeitsprüfung eines Pakets durch Beziehen auf Gültigkeitsinformationen, die in dem Header des Pakets enthalten sind,
wobei die Gültigkeitsinformationen alle nötigen Informationen aufweisen, die zur Durchführung einer Gültigkeitsprüfung des Pakets erforderlich sind, und die Gültigkeitsinformationen Algorithmusinformationen (**H2**) aufweisen, die zur Durchführung einer Gültigkeitsprüfung des Pakets zu verwenden sind,
wobei die Algorithmusinformationen (**H2**) einen zur Durchführung einer Gültigkeitsprüfung des Pakets zu verwendenden Algorithmus angeben und Werte zum Initialisieren des zur Durchführung einer Gültigkeitsprüfung des Pakets zu verwendenden Algorithmus aufweisen.

17. Netzwerkknoten (**C**) zum Weiterleiten von Paketen von einem sendenden Netzwerkknoten zu einem empfangenden Netzwerkknoten, mit
einer Einrichtung (**C1**) zur Durchführung einer Gültigkeitsprüfung eines Pakets durch Beziehen auf Gültigkeitsinformationen, die in dem Header des Pakets enthalten sind,
wobei die Gültigkeitsinformationen alle nötigen Informationen aufweisen, die zur Durchführung einer Gültigkeitsprüfung des Pakets erforderlich sind, und die Gültigkeitsinformationen Algorithmusinformationen (**H2**) aufweisen, die zur Durchführung einer Gültigkeitsprüfung des Pakets zu verwenden sind,
wobei die Algorithmusinformationen (**H2**) einen zur Durchführung einer Gültigkeitsprüfung des Pakets zu verwendenden Algorithmus angeben und Werte zum Initialisieren des zur Durchführung einer Gültigkeitsprüfung des Pakets zu verwendenden Algorithmus aufweisen.

18. Netzwerkknoten nach einem der Ansprüche 15 bis 17, wobei die Gültigkeitsinformationen Sicherheitsinformationen (**H1**) aufweisen, die an dem Paket angewendete Sicherheitsdienste angeben.

19. Netzwerkknoten nach einem der Ansprüche 15 bis 17, wobei die Gültigkeitsinformationen Informationen bezüglich eines öffentlichen Schlüssels des sendenden Knotens (**H3**) aufweisen.

20. Netzwerkknoten nach Anspruch 19, wobei die Informationen bezüglich des öffentlichen Schlüssels (**H3**) Referenzinformationen aufweisen, wie der öffentliche Schlüssel erhalten werden kann.

21. Netzwerkknoten nach Anspruch 20, wobei die Referenzinformationen eine Identität einer Einheit aufweisen, von der der öffentliche Schlüssel erhalten werden kann.

22. Netzwerkknoten nach Anspruch 20, wobei die Referenzinformationen einen öffentlichen Schlüsselidentifizierer für den öffentlichen Schlüssel aufweisen.

23. Netzwerkknoten nach Anspruch 19, wobei die Informationen bezüglich des öffentlichen Schlüssels (**H3**) den öffentlichen Schlüssel selbst aufweisen.

24. Netzwerkknoten nach Anspruch 19, wobei die Informationen bezüglich des öffentlichen Schlüssels öffentliche Schlüsselverifizierungsinformationen (**H4**) aufweisen, die Informationen angeben, um zu verifizieren, dass der öffentliche Schlüssel tatsächlich zu dem sendenden Knoten gehört.

25. Netzwerkknoten nach einem der Ansprüche 15 bis 17, wobei die Gültigkeitsinformationen eine Information zum Verhindern von Replay-Angriffen (**H5**) aufweisen.

26. Netzwerkknoten nach Anspruch 25, wobei die Information zum Verhindern von Replay-Angriffen (**H5**) die Angabe des Verfahrens enthält, das für Anti-Replay-Angriffe zu verwenden ist.

27. Netzwerkknoten nach Anspruch 25, wobei die Information zum Verhindern von Replay-Angriffen (**H5**) einen Zeitstempel enthält.

28. Netzwerkknoten nach Anspruch 19 weiterhin mit
einer Einrichtung zum Signieren des Pakets unter Verwendung eines privaten Schlüssels entsprechend dem öffentlichen Schlüssel, der durch die Gültigkeitsinformationen in dem Paket-Header (**H3**) angegeben ist, in dem sendenden Netzwerkknoten.

29. Netzwerkknoten nach einem der Ansprüche 15 bis 17, wobei der Netzwerkknoten ein mobiler Netzwerkknoten ist.

30. Netzwerksystem mit einem Netzwerkknoten (**A**) nach Anspruch 15, der eingerichtet ist, ein Paket zu senden, und einen Netzwerkknoten (**B**) nach Anspruch 16, der eingerichtet ist, das Paket zu empfangen.

31. Netzwerksystem nach Anspruch 30, weiterhin mit zumindest einem Zwischenknoten (**C**) nach Anspruch 17.

## Revendications

1. Procédé permettant de protéger des paquets à envoyer à partir d'un premier noeud de réseau (A) vers un deuxième noeud de réseau (B), comprenant le fait :
de générer (S21) des informations de validité pour un paquet ;
de générer (S22) un en-tête pour le paquet, comprenant les informations de validité,
d'envoyer (S22) le paquet comportant l'en-tête à partir du premier noeud de réseau vers le deuxième noeud de réseau,
**caractérisé en ce que**
les informations de validité comprennent toutes informations nécessaires pour effectuer un contrôle de validité du paquet, et les informations de validité comprennent des informations d'algorithme (H2) à utiliser pour effectuer un contrôle de validité du paquet,
dans lequel les informations d'algorithme (H2) indiquent un algorithme à utiliser pour effectuer un contrôle de validité du paquet et comprennent des valeurs pour initialiser l'algorithme à utiliser pour effectuer un contrôle de validité du paquet.

2. Procédé selon la revendication 1, dans lequel les informations de validité comprennent des informations de sécurité (H1) indiquant des services de sécurité appliqués au paquet.

3. Procédé selon la revendication 1, dans lequel les informations de validité comprennent des informations de clé publique du noeud émetteur (H3).

4. Procédé selon la revendication 3, dans lequel les informations de clé publique (H3) comprennent des informations de référence concernant la manière dont la clé publique peut être obtenue.

5. Procédé selon la revendication 4, dans lequel les informations de référence comprennent une identité d'une entité à partir de laquelle la clé publique peut être obtenue.

6. Procédé selon la revendication 4, dans lequel les informations de référence comprennent un identifiant de clé publique destiné à la clé publique.

7. Procédé selon la revendication 3, dans lequel les informations de clé publique (H3) comprennent la clé publique elle-même.

8. Procédé selon la revendication 3, dans lequel les informations de clé publique comprennent des informations de vérification de clé publique (H4) indiquant des informations qui permettent de vérifier que la clé publique appartient effectivement au noeud émetteur.

9. Procédé selon la revendication 1, dans lequel les informations de validité comprennent un élément d'informations permettant d'empêcher des attaques par rejeu (H5).

10. Procédé selon la revendication 9, dans lequel l'élément d'informations permettant d'empêcher des attaques par rejeu (H5) contient l'indication du procédé à utiliser contre des attaques par rejeu.

11. Procédé selon la revendication 9, dans lequel l'élément d'informations permettant d'empêcher des attaques par rejeu (H5) contient une estampille temporelle.

12. Procédé selon la revendication 3, comprenant en outre le fait :
de signer le paquet en utilisant une clé privée correspondant à la clé publique indiquée par les informations de validité dans l'en-tête de paquet (H3) dans le noeud de réseau émetteur.

13. Procédé selon la revendication 1, comprenant en outre le fait :
d'effectuer un contrôle de validité (S42) d'un paquet en se référant aux informations de validité contenues dans l'en-tête du paquet dans le noeud récepteur.

14. Procédé selon la revendication 1, comprenant en outre le fait :
d'effectuer un contrôle de validité (S42) d'un paquet en se référant aux informations de validité contenues dans l'en-tête du paquet dans un noeud intermédiaire.

15. Noeud de réseau (A) permettant d'envoyer des paquets à un noeud de réseau récepteur, comprenant :
un moyen (A1) destiné à générer des informations de validité pour un paquet ;
un moyen (A1) destiné à générer un en-tête pour le paquet, comprenant les informations de validité, et
un moyen destiné à envoyer le paquet comportant l'en-tête au noeud de réseau récepteur,
dans lequel les informations de validité comprennent toutes informations nécessaires pour effectuer un contrôle de validité du paquet, et les informations de validité comprennent des informations d'algorithme (H2) à utiliser pour effectuer un contrôle de validité du paquet,
dans lequel les informations d'algorithme (H2) indiquent un algorithme à utiliser pour effectuer un contrôle de validité du paquet et comprennent des valeurs pour initialiser l'algorithme à utiliser pour effectuer un contrôle de validité du paquet.

16. Noeud de réseau (B) permettant de recevoir des paquets à partir d'un noeud de réseau émetteur, comprenant :
un moyen (B1) destiné à effectuer un contrôle de validité d'un paquet en se référant à des informations de validité contenues dans l'en-tête du paquet,
dans lequel les informations de validité comprennent toutes informations nécessaires pour effectuer un contrôle de validité du paquet, et les information de validité comprennent des informations d'algorithme (H2) à utiliser pour effectuer un contrôle de validité du paquet,
dans lequel les informations d'algorithme (H2) indiquent un algorithme à utiliser pour effectuer un contrôle de validité du paquet et comprennent des valeurs pour initialiser l'algorithme à utiliser pour effectuer un contrôle de validité du paquet.

17. Noeud de réseau (C) permettant de transférer des paquets à partir d'un noeud de réseau émetteur vers un noeud de réseau récepteur, comprenant :
un moyen (C1) destiné à effectuer un contrôle de validité d'un paquet en se référant à des informations de validité contenues dans l'en-tête du paquet,
dans lequel les informations de validité comprennent toutes informations nécessaires pour effectuer un contrôle de validité du paquet, et les informations de validité comprennent des informations d'algorithme (H2) à utiliser pour effectuer un contrôle de validité du paquet,
dans lequel les informations d'algorithme (H2) indiquent un algorithme à utiliser pour effectuer un contrôle de validité du paquet et comprennent des valeurs pour initialiser l'algorithme à utiliser pour effectuer un contrôle de validité du paquet.

18. Noeud de réseau selon l'une des revendications 15 à 17, dans lequel les informations de validité comprennent des informations de sécurité (H1) indiquant des services de sécurité appliqués au paquet.

19. Noeud de réseau selon l'une des revendications 15 à 17, dans lequel les informations de validité comprennent des informations de clé publique (H3) du noeud émetteur.

20. Noeud de réseau selon la revendication 19, dans lequel les informations de clé publique (H3) comprennent des informations de référence concernant la manière dont la clé publique peut être obtenue.

21. Noeud de réseau selon la revendication 20, dans lequel les informations de référence comprennent une identité d'une entité à partir de laquelle la clé publique peut être obtenue.

22. Noeud de réseau selon la revendication 20, dans lequel les informations de référence comprennent un identifiant de clé publique destiné à la clé publique.

23. Noeud de réseau selon la revendication 19, dans lequel les informations de clé publique (H3) comprennent la clé publique elle-même.

24. Noeud de réseau selon la revendication 19, dans lequel les informations de clé publique comprennent des informations de vérification de clé publique (H4) indiquant des informations qui permettent de vérifier que la clé publique appartient effectivement au noeud émetteur.

25. Noeud de réseau selon l'une des revendications 15 à 17, dans lequel les informations de validité comprennent un élément d'informations permettant d'empêcher les attaques par rejeu (H5).

26. Noeud de réseau selon la revendication 25, dans lequel l'élément d'informations permettant d'empêcher les attaques par rejeu (H5) contient l'indication du procédé à utiliser contre des attaques par rejeu.

27. Noeud de réseau selon la revendication 25, dans lequel l'élément d'informations permettant d'empêcher des attaques par rejeu contient une estampille temporelle.

28. Noeud de réseau selon la revendication 19, comprenant en outre
un moyen destiné à signer le paquet en utilisant une clé privée correspondant à la clé publique indiquée par les informations de validité dans l'en-tête de paquet dans le noeud de réseau émetteur.

29. Noeud de réseau selon l'une des revendications 15 à 17, dans lequel le noeud de réseau est un noeud de réseau mobile.

30. Système de réseau comprenant un noeud de réseau (A) selon la revendication 15 adapté pour envoyer un paquet, et un noeud de réseau (B) selon la revendication 16 adapté pour recevoir le paquet.

31. Système de réseau selon la revendication 30, comprenant en outre au moins un noeud intermédiaire (C) selon la revendication 17.
